# EUROPEAN PATENT SPECIFICATION

(11) **EP 1 089 609 B1**
(45) Date of publication and mention of the grant of the patent: **17.12.2003**
(21) Application number: 00921180.6
(22) Date of filing: 18.04.2000
(51) Int. Cl.: A01B 79/00, A01D 69/00, A01B 67/00

(54) **AN AGRICULTURAL MACHINE**
LANDWIRTSCHAFTLICHE MASCHINE
MACHINE AGRICOLE

(30) Priority: 23.04.1999 NL 1011885
(43) Date of publication of application: 11.04.2001
(73) Proprietor: Lely Enterprises AG, 6300 ZUG (CH)
(72) Inventor: VAN DER LELY, Olaf, CH-6300 Zug (CH); VAN DER LELY, Alexander, NL-3065 NA Rotterdam (NL)
(74) Representative: Corten, Maurice Jean F.M.
(86) International application number: NL0000252
(87) International publication number: WO00064232

(56) References cited:
- EP-A- 0 181 308
- WO-A-82/01354
- WO-A-99/14999
- DE-A- 3 500 886
- DE-A- 4 239 530
- NL-C- 1 001 586

## Description

The invention relates to an agricultural machine as claimed in the preamble of claim 1. With such agricultural machines (e.g. rake machines, rotary harrows or mowing machines) the working members are driven at a certain number of revolutions per minute (called hereinafter rpm).

Such a machine is known from the German patent application DE-4239530. Herein a tractor with an soil working machine is described. The working members of the soil working machine are drivable by the power take off of the tractor. A control unit is provided with a memory, an entrance for getting signals of the rpm of the power take off and an exit coupled to actuators for controlling the speed of the tractor. By means of the control unit and the attached components, it is possible to change the working point of the machine into a more optimal working point by changing the speed of the tractor in dependence of the measured rpm.

The invention aims at providing an improved agricultural machine. According to the invention this is achieved by the measures mentioned in the characterizing part of claim 1. In this manner, the optimum rpm for the driven working members can always be set at any driving speed, which results in an improved soil and/or crop working.

The invention will now be explained in further detail with reference to the accompanying drawing.

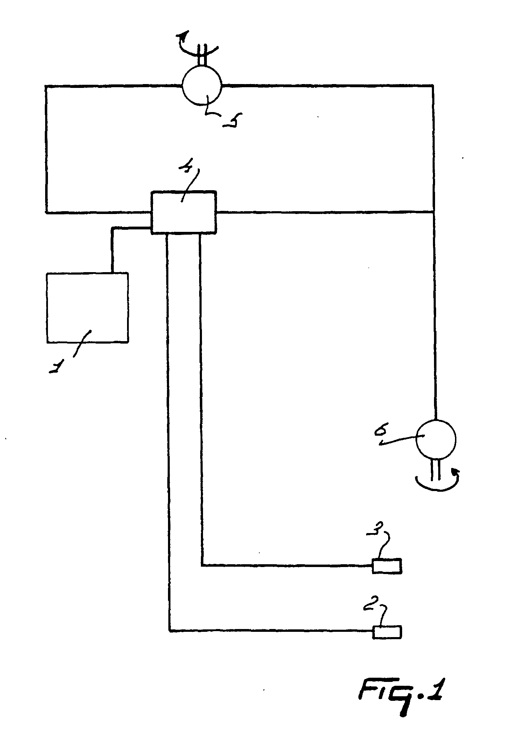

Figure 1 shows a diagram of a measuring and control system for an agricultural machine according to the invention.

Figure 1 shows a diagram of a measuring and control system for a first embodiment of the agricultural machine according to the invention. The (non-shown) agricultural machine is provided with at least one drivable soil and/or crop working member. There is provided a storage medium 1, connected to the agricultural machine, in which a relation between the rpm of the working member and the driving speed of the agricultural machine is stored. The storage medium 1 may e.g. be constituted by a computer memory. The storage medium 1 is not necessarily directly fastened to the agricultural machine, but may also be provided elsewhere (e.g. on the tractor of the agricultural machine). It is connected directly or indirectly (e.g. in a wireless manner) to the agricultural machine.

The relation stored may consist of a series of values for the driving speed and a corresponding series of values for the rpm. The relation may also comprise a functional relationship which associates each value of the driving speed in a certain interval with a corresponding value for the rpm of the working member. Preferably, the relation links an optimum value for the rpm to each value for the driving speed. These optimum values may be predetermined, e.g. by the manufacturer, by means of tests with the agricultural machine. The agricultural machine is provided with means for regulating, on the basis of the relation stored in the storage medium 1, the rpm of the working member in dependence of the current driving speed of the agricultural machine, so that the rpm is always set automatically in an optimum manner.

In a preferred embodiment, for various values of at least one working parameter, there is stored each time a corresponding relation between the rpm and the driving speed. The working parameters may comprise e.g. the type of soil and/or the type of crop and/or the amount of crop and/or the humidity of the crop. The working parameter(s) is/are adjustable, as a result of which the corresponding relation is selected. For each value of a working parameter there is stored in the storage medium 1 a relation between the driving speed and the rpm, on the basis of which the rpm of the working member is regulated.

The working parameter(s) may be manually adjustable by a user. When the humidity of a crop to be raked is adjustable as a working parameter, the user can choose, with the aid of a selector button on the storage medium 1, e.g. a value from 1 to 5, the value 1 corresponding to dry crop and the value 5 to very wet crop. It is also possible that the agricultural machine is provided with measuring means for measuring a quantity which is relevant to at least one working parameter, said measuring means being suitable for automatically adjusting the working parameter(s). As a quantity may be measured e.g. the conductivity, density or resistance of e.g. the type of soil or the crop. For that purpose the measuring means may comprise e.g. a conductivity sensor, a measuring pin for the density or a measuring device with an angular deflection for the amount of crop. In this manner the working parameters can be adjusted automatically, as a result of which the correct relation in the storage medium 1 is selected automatically, by means of which the rpm of the working member is regulated automatically.

The working member may e.g. be constituted by a rotary harrow, a crushing rotor of a mowing machine, a mowing disc of a mowing machine, a rake device or a tedder member of a tedder. As a preferred embodiment there will be described hereinafter a rake machine in which, according to the invention, the rpm of the rake members is regulated in dependence of the driving speed of the agricultural machine.

A sensor 2 for measuring the current driving speed of the agricultural machine is provided on the agricultural machine itself, on the tractor or elsewhere. The agricultural machine is further provided with a sensor 3 for measuring the current rpm of the working member. The storage medium 1 and the sensors 2, 3 are connected (directly or indirectly, e.g. in a wireless manner) to a control valve 4. There is further provided a hydraulic pump 5 which is driven e.g. via a power take-off shaft of the tractor. Finally there is provided a hydraulic motor 6 which is suitable for driving the rake member.

The hydraulic motor 6 is actuated by the hydraulic pump 5, while the control valve 4 leads part of the oil, flowing from the hydraulic pump 5 to the hydraulic motor 6, back to the hydraulic pump 5. By regulating exactly, by means of the control valve 4, the proportion between the amount of oil flowing to the hydraulic motor and the amount of oil flowing back to the hydraulic pump 5, in dependence of the signals from the sensors 2 and 3 and the relation stored in the storage medium 1, the rpm of the rake member can each time be set accurately.

In an embodiment of the invention, there are provided signal means, which are connected to the agricultural machine, for giving a warning signal when the driving speed of the agricultural machine goes beyond the bounds of a permitted speed interval. In this manner the user is warned when he is driving too fast or too slowly.

In a further embodiment, the working member can be controlled by means of a curved path, the position of the curved path being adjustable in dependence of the working parameter(s). In this manner a further optimization of the crop working can be achieved.

Of course, there are other ways of regulating the rpm in accordance with the desired relation stored in the storage medium 1, e.g. by means of variable speed gears known per se.

## Claims

1. An agricultural machine provided with at least one drivable soil and/or crop working member and provided with a storage medium (1), connected to the agricultural machine, in which a relation between a rotation, i.e. rpm, of the working member and the driving speed of the agricultural machine is stored, **characterized in that** the agricultural machine is provided with means (2 - 6) for regulating, on the basis of the relation stored, the rpm of the working member in dependence of the current driving speed of the agricultural machine.

2. An agricultural machine as claimed in claim 1, **characterized in that** for various values of at least one working parameter there is stored each time a corresponding relation between the rpm and the driving speed.

3. An agricultural machine as claimed in claim 2, **characterized in that** the working parameter(s) is/are adjustable, as a result of which the corresponding relation(s) is/are selectable.

4. An agricultural machine as claimed in claim 3, **characterized in that** the working parameter(s) is/are manually adjustable by a user.

5. An agricultural machine as claimed in claim 3 or 4, **characterized in that** the agricultural machine is provided with measuring means for measuring a quantity which is relevant to at least one working parameter, said measuring means being suitable for adjusting the working parameter(s).

6. An agricultural machine as claimed in any one of claims 2 to 5, **characterized in that** the working parameter(s) comprise(s) the type of soil and/or the type of crop and/or the amount of crop and/or the humidity of the crop.

7. An agricultural machine as claimed in any one of claims 1 to 6, **characterized in that** the working member is ground-drivable.

8. An agricultural machine as claimed in any one of claims 1 to 6, **characterized in that** the means (2 - 6) for regulating the rpm of the working member comprise a hydraulic motor (6) and/or an electric motor.

9. An agricultural machine as claimed in any one of claims 1 to 8, **characterized in that** there is provided a sensor (2) for measuring the current driving speed of the agricultural machine.

10. An agricultural machine as claimed in any one of claims 1 to 9, **characterized in that** the agricultural machine is provided with a sensor (3) for measuring the current rpm of the working member.

11. An agricultural machine as claimed in claim 10,
**characterized in that** the agricultural machine is provided with a control valve (4) connected to the storage medium (1), the driving speed sensor (2) and the rpm sensor (3).

12. An agricultural machine as claimed in any one of claims 1 to 11, **characterized in that** there are provided signal means, which are connected to the agricultural machine, for giving a warning signal when the driving speed of the agricultural machine goes beyond the bounds of a permitted speed interval.

13. An agricultural machine as claimed in any one of claims 2 to 12, **characterized in that** the working member can be controlled by means of a curved path, the position of the curved path being adjustable in dependence of the working parameter(s).

14. An agricultural machine as claimed in any one of claims 1 to 13, **characterized in that** the working member is constituted by a rotary harrow.

15. An agricultural machine as claimed in any one of claims 1 to 13, **characterized in that** the working member is constituted by a crushing rotor of a mowing machine.

16. An agricultural machine as claimed in any one of claims 1 to 13, **characterized in that** the working member is constituted by a mowing disc of a mowing machine.

17. An agricultural machine as claimed in any one of claims 1 to 13, **characterized in that** the working member is constituted by a rake member of a rake machine.

18. An agricultural machine as claimed in any one of claims 1 to 13, **characterized in that** the working member is constituted by a tedder member of a tedder.

19. A storage medium suitable for being applied in an agricultural machine as claimed in any one of claims 1 - 18.

## Patentansprüche

1. Landwirtschaftliche Maschine mit mindestens einem antreibbaren Boden- und/oder Gutbearbeitungsglied und einem mit der landwirtschaftlichen Maschine verbundenen Speichermedium (1), in dem ein Verhältnis zwischen einer Rotation, d. h. Drehzahl, des Bearbeitungsgliedes und der Fahrgeschwindigkeit der landwirtschaftlichen Maschine gespeichert wird,
**dadurch gekennzeichnet, daß** die landwirtschaftliche Maschine mit Vorrichtungen (2 bis 6) versehen ist, die auf der Basis des gespeicherten Verhältnisses die Drehzahl des Bearbeitungsgliedes in Abhängigkeit von der gegenwärtigen Fahrgeschwindigkeit der landwirtschaftlichen Maschine regeln.

2. Landwirtschaftliche Maschine nach Anspruch 1,
**dadurch gekennzeichnet, daß** für verschiedene Werte mindestens eines Bearbeitungsparameters jeweils ein entsprechendes Verhältnis zwischen der Drehzahl und der Fahrgeschwindigkeit gespeichert wird.

3. Landwirtschaftliche Maschine nach Anspruch 2,
**dadurch gekennzeichnet, daß** der/die Bearbeitungsparameter einstellbar ist/sind, so daß das/die entsprechende(n) Verhältnis(se) auswählbar ist/sind.

4. Landwirtschaftliche Maschine nach Anspruch 3,
**dadurch gekennzeichnet, daß** der/die Bearbeitungsparameter von einem Benutzer manuell einstellbar ist/sind.

5. Landwirtschaftliche Maschine nach Anspruch 3 oder 4,
**dadurch gekennzeichnet, daß** die landwirtschaftliche Maschine mit einer Meßvorrichtung versehen ist, die eine für mindestens einen Bearbeitungsparameter relevante Menge abmißt, wobei die Meßvorrichtung geeignet ist, den/die Bearbeitungsparameter einzustellen.

6. Landwirtschaftliche Maschine nach einem der Ansprüche 2 bis 5,
**dadurch gekennzeichnet, daß** der/die Bearbeitungsparameter die Art des Bodens und/oder die Art des Gutes und/oder die Menge des Gutes und/oder die Feuchtigkeit des Gutes umfaßt/umfassen.

7. Landwirtschaftliche Maschine nach einem der Ansprüche 1 bis 6,
**dadurch gekennzeichnet, daß** das Bearbeitungsglied durch den Boden anzutreiben ist.

8. Landwirtschaftliche Maschine nach einem der Ansprüche 1 bis 6,
**dadurch gekennzeichnet, daß** die Vorrichtung (2 bis 6) zum Regeln der Drehzahl des Bearbeitungsgliedes einen Hydraulikmotor (6) und/oder einen Elektromotor umfaßt.

9. Landwirtschaftliche Maschine nach einem der Ansprüche 1 bis 8,
**dadurch gekennzeichnet, daß** ein Sensor (2) zum Messen der gegenwärtigen Fahrgeschwindigkeit der landwirtschaftlichen Maschine vorgesehen ist.

10. Landwirtschaftliche Maschine nach einem der Ansprüche 1 bis 9,
**dadurch gekennzeichnet, daß** die landwirtschaftliche Maschine mit einem Sensor (3) zum Messen der gegenwärtigen Drehzahl des Bearbeitungsgliedes versehen ist.

11. Landwirtschaftliche Maschine nach Anspruch 10,
**dadurch gekennzeichnet, daß** die landwirtschaftliche Maschine mit einem Steuerventil (4) versehen ist, das mit dem Speichermedium (1), dem Fahrgeschwindigkeitssensor (2) und dem Drehzahlsensor (3) verbunden ist.

12. Landwirtschaftliche Maschine nach einem der Ansprüche 1 bis 11,
**dadurch gekennzeichnet, daß** eine mit der landwirtschaftlichen Maschine verbundene Signalvorrichtung vorgesehen ist, die ein Warnsignal gibt, wenn die Fahrgeschwindigkeit der landwirtschaftlichen Maschine die Grenzen eines zulässigen Geschwindigkeitsbereiches überschreitet.

13. Landwirtschaftliche Maschine nach einem der Ansprüche 2 bis 12,
**dadurch gekennzeichnet, daß** das Bearbeitungsglied mit Hilfe eines gekrümmten Bewegungsweges gesteuert werden kann, wobei die Position des gekrümmten Bewegungsweges in Abhängigkeit von dem/den Bearbeitungsparameter(n) einstellbar ist.

14. Landwirtschaftliche Maschine nach einem der Ansprüche 1 bis 13,
**dadurch gekennzeichnet, daß** das Bearbeitungsglied durch eine Kreiselegge gebildet ist.

15. Landwirtschaftliche Maschine nach einem der Ansprüche 1 bis 13,
**dadurch gekennzeichnet, daß** das Bearbeitungsglied durch einen Quetschrotor einer Mähmaschine gebildet ist.

16. Landwirtschaftliche Maschine nach einem der Ansprüche 1 bis 13,
**dadurch gekennzeichnet, daß** das Bearbeitungsglied durch eine Mähscheibe einer Mähmaschine gebildet ist.

17. Landwirtschaftliche Maschine nach einem der Ansprüche 1 bis 13,
**dadurch gekennzeichnet, daß** das Bearbeitungsglied durch einen Rechkörper eines Rechens gebildet ist.

18. Landwirtschaftliche Maschine nach einem der Ansprüche 1 bis 13,
**dadurch gekennzeichnet, daß** das Bearbeitungsglied durch ein Zettwenderelement eines Zettwenders gebildet ist.

19. Speichermedium zur Verwendung in einer landwirtschaftlichen Maschine nach einem der Ansprüche 1 bis 18.

## Revendications

1. Machine agricole munie d'au moins un élément de fonctionnement entraînable de travail de sol et/ou de culture et munie d'un milieu de stockage (1) raccordé à la machine agricole, dans lequel une relation entre une rotation, c'est-à-dire, rpm, de l'élément de fonctionnement et la vitesse d'entraînement est stockée, **caractérisée en ce que** la machine agricole est munie de moyens (2-6) pour ajuster, sur la base de la relation stockée, le rpm de l'élément de fonctionnement par rapport à la vitesse d'entraînement actuelle de la machine agricole.

2. Machine agricole, selon la revendication 1, **caractérisée en ce que** pour diverses valeurs d'au moins un paramètre de fonctionnement, une relation correspondante entre le rpm et la vitesse d'entraînement est stockée à chaque fois.

3. Machine agricole selon la revendication 2, **caractérisée en ce que** le(s) paramètre(s) de fonctionnement est/sont réglable(s), ce qui a pour résultat que la (les) relation(s) correspondante(s) est/sont sélectionnable(s).

4. Machine agricole selon la revendication 3, **caractérisée en ce que** le(s) paramètre(s) de fonctionnement est /sont réglables manuellement par un utilisateur.

5. Machine agricole selon l'une des revendications 3 ou 4, **caractérisée en ce que** la machine agricole est munie de moyens pour mesurer une quantité qui est pertinente pour au moins un paramètre de fonctionnement, lesdits moyens de mesure pouvant être utilisés pour régler le(s) paramètre(s) de fonctionnement.

6. Machine agricole selon l'une quelconque des revendications 2 à 5, **caractérisée en ce que** le(s) paramètre(s) de fonctionnement comprend (comprennent) le type de terroir et/ou le type de culture et/ou la quantité de culture et/ou l'humidité de la culture.

7. Machine agricole selon l'une quelconque des revendications 1 à 6, **caractérisée en ce que** l'élément de fonctionnement est entraînable par une roue porteuse.

8. Machine agricole selon l'une quelconque des revendications 1 à 6, **caractérisée en ce que** les moyens (2 à 6) pour ajuster le rpm de l'élément de fonctionnement comprennent un moteur hydraulique (6) et/ou un moteur électrique.

9. Machine agricole selon l'une quelconque des revendications 1 à 8, **caractérisée en ce qu'**elle est munie d'un capteur (2) pour mesurer la vitesse d'entraînement actuelle de la machine agricole.

10. Machine agricole selon l'une quelconque des revendications 1 à 9, **caractérisée en ce qu'**elle est munie d'un capteur (3) pour mesurer le courant rpm de l'élément de fonctionnement.

11. Machine agricole selon la revendication 10, **caractérisée en ce que** la machine agricole est munie d'une soupape de commande (4) reliée au milieu de stockage (1), le capteur de vitesse d'entraînement (2) et le capteur rpm (3).

12. Machine agricole selon l'une quelconque des revendications 1 à 11, **caractérisée en ce que** des moyens de signal sont fournis, raccordés à la machine agricole, pour fournir un signal avertisseur lorsque la vitesse d'entraînement de la machine agricole dépasse les limites de l'intervalle de vitesse autorisé.

13. Machine agricole selon l'une quelconque des revendications 2 à 12, **caractérisée en ce que** l'élément de fonctionnement peut être commandé au moyen d'une trajectoire courbe, la position de la trajectoire courbe étant réglable par rapport à (aux) paramètre(s) de fonctionnement.

14. Machine agricole selon l'une quelconque des revendications 1 à 13, **caractérisée en ce que** l'élément de fonctionnement est composé d'une herse roulante.

15. Machine agricole selon l'une quelconque des revendications 1 à 13, **caractérisée en ce que** l'élément de fonctionnement est composé d'un rotor de broyage d'une faucheuse.

16. Machine agricole selon l'une quelconque des revendications 1 à 13, **caractérisée en ce que** l'élément de fonctionnement est composé d'un disque de fauchage et d'une faucheuse.

17. Machine agricole selon l'une quelconque des revendications 1 à 13, **caractérisée en ce que** l'élément de fonctionnement est composé d'un élément de râteau d'une ratisseuse.

18. Machine agricole selon l'une des revendications 1 à 13, **caractérisée en ce que** l'élément de fonctionnement est composé d'un élément de faneuse d'une faneuse.

19. Milieu de stockage convenable pour être appliqué dans une machine agricole selon l'une quelconque des revendications 1 à 18.
